# EUROPÄISCHE PATENTANMELDUNG

(11) **EP 1 102 231 A1**
(43) Veröffentlichungstag der Anmeldung: **23.05.2001**
(21) Anmeldenummer: 00811087.6
(22) Anmeldetag: 16.11.2000
(51) Int. Cl.: G09B 27/04, F21V 8/00, G09F 9/30

(54) **Lichteffekteinrichtung**

(30) Priorität: 16.11.1999 CH 208299
(71) Anmelder: Kucher, Wolfgang, 5707 Seengen (CH)
(72) Erfinder: Kucher, Wolfgang, 5707 Seengen (CH)
(74) Vertreter: Braun, André, jr.

(57) **Zusammenfassung**

Die Lichteffekteinrichtung dient der Erzeugung einer Vielzahl von Lichtpunkten, beispielsweise in der Art eines Sternenhimmels. Sie besteht aus einer Trägerplatte (1), von deren Sichtseite (2) lichtleitende Fasern (4) durch die Platte zu einem an deren Rückseite angeordneten Projektor (6) führen. Die Platte kann dreidimensional geformt, beispielsweise gewölbt sein. An ihrer Rückseite können mehrere Projektoren angeordnet sein, die mit einem Farbrad ausgerüstet sein können.

## Beschreibung

Die Erfindung betrifft eine Einrichtung zur Erzeugung eines Lichteffekts mit einer Vielzahl von Lichtpunkten, beispielsweise zur Simulation eines Sternenhimmels.

Lichteffekteinrichtungen, die beispielsweise einen Sternenhimmel abbilden, sind bekannt. Sie bestehen aus einer Vielzahl von klein dimensionierten Lichtquellen, die entsprechend einem gewünschten Muster über eine Fläche, in der Regel die Decke einer Raums, verteilt angeordnet sind und die entweder alle gemeinsam oder individuell ein- und ausschaltbar oder intensitätsgeregelt sind.

Die bekannten Einrichtungen dieser Art haben den Nachteil, dass die Lichtquellen im ausgeschalteten Zustand bei Tageslicht oder Allgemeinbeleuchtung sichtbar sind. Dies ist optisch störend und beeinträchtigt in einem gewissen Mass den erwünschen Effekt der Einrichtung.

Der Erfindung liegt die Aufgabe zugrunde, eine Lichteffekteinrichtung ohne die erwähnten Nachteile bereitzustellen.

Erfindungsgemäss wird dies erreicht durch eine Trägerplatte mit einer Sichtseite und einer Rückseite, einen an der Rückseite angeordneten Projektor und von der Sichtseite durch die Platte zur Rückseite führende und mit dem Projektor optisch gekoppelte, lichtleitende Fasern. Die Platte kann dabei eben oder drei-dimensional geformt, beispielsweise gewölbt sein. Es können gleichzeitig mehrere Projektoren an der Rückseite angeordnet sein. Die Projektoren können mit einem Farbrad ausgerüstet sein.

Im folgenden werden anhand der beiliegenden Zeichnungen bevorzugte Ausführungsbeispiele der Erfindung beschrieben. Es zeigen
Fig. 1 eine schematische Darstellung einer Einrichtung zur Erzeugung eines Sternenhimmeleffekts
Fig. 2 eine alternative Ausführungsform der Einrichtung mit gewölbter Platte.

Eine Platte 1 aus Gipskarton besitzt eine Sichtseite 2 und eine Rückseite 3. Eine Vielzahl von lichtleitenden Fasern 4 führt von der Rückseite durch entsprechende Bohrungen in der Platte hindurch und endet auf der Sichtseite. Die Fasern sind zu einem Bündel 5 zusammengefasst mit einem Projektor 6 optisch gekoppelt. Der Projektor ist auf der Rückseite der Platte 1 montiert.

Die Fasern sind gemäss einem Muster über die Plattenfläche verteilt, das einem oder mehreren Sternbildern entspricht. Die Fasern können einzeln oder in Gruppen von zwei, drei oder mehr Fasern durch die Platte verlaufen. Je nachdem, ob eine oder mehrere Fasern durch eine Bohrung geführt sind, ist der jeweilige Lichtpunkt kleiner oder grösser.

Anstelle von Gipskarton kann die Platte auch aus einem anderen Material bestehen, wie beispielsweise Fermacell, Spanplatte etc. Die Fasern 4 bestehen aus Glas oder Kunststoff.

Anstelle eines Faserbündels und eines Projektors können auch deren zwei oder mehr angeordnet werden. Bei mehreren Projektoren können unterschiedliche Farben vorgesehen werden. Die Projektoren können mit einem Farbrad zum Wechseln der Farbe versehen sein. Wenn bei einer Fasergruppe die einzelnen Fasern mit verschiedenfarbigen Projektoren verbunden sind, ergeben sich Mischfarbeffekte.

Die Herstellung wird wie folgt vorgenommen:

Zuerst wird eine Unterkonstruktion für die Gipskartondecke erstellt. Danach werden die Sterne je nach Grösse des Raumes eingeteilt (kleiner Raum ca. 50 Lichtpunkte pro qm, grösserer Raum ca. 30 Lichtpunkte pro qm, die wiederum in Einer-, Zweier- oder Dreierelemente eingeteilt werden.

Nun wird die Aufteilung der Gipskartonplatte angezeichnet und von der Sichtseite gebohrt, wobei der Durchmesser des Bohrers angepasst ist, je nachdem, ob es ein, zwei oder mehrere Fasern sind, die durchgesteckt werden. Anschliessend wird das Loch mit einem feinen Schleifpapier verschliffen, damit keine Bohrrückstände vorstehen.

Die Fasern werden nun einzeln oder in Zweier- oder Dreiergruppen etc. von hinten durchgesteckt und mit einem Acrylkitt verklebt, damit die Fasern bei der Nachbearbeitung nicht wegrutschen können. Anschliessend wird die Platte mit den eingezogenen Fasern montiert, geklebt, verschraubt oder mit anderen Methoden befestigt.

Danach werden die vorstehenden Fasern grob abgezwickt, jedoch noch immer etwas vorstehend. Sämtliche Fugen werden verspachtelt und verschliffen zur Aufnahme von Farbe oder ähnlichen Finishbehandlungen. Jetzt wird die gesamte Fläche mit einem Füller gespritzt, um noch restliche Porenöffnungen zu schliessen. Danach wird zweimal mit Farbe gespritzt. Nach dem Trocknen wird der noch vorstehende Teil der Fasern bis auf einen Rest von 1 mm Länge abgezwickt. Der verbleibende vorstehende Teil ergibt einen funkelnden Sterneffekt. Ausserdem könnte man die Fasern später, falls z.B nach einer Farbbehandlung nötig, nachziehen.

Die Vorteile der vorstehend beschriebenen Einrichtung bestehen zum einen vor allem darin, dass es keine Austrittselemente gibt, die man sieht, wenn das Licht ausgeschaltet ist. Dies ermöglicht den Einbau von Sternbildern auch in ganz normalen Wohnbereichen in realistischer Eleganz, oder dort wo ein dezentes Effektbild benötigt wird. Zum anderen kann die erfindungsgemässe Einrichtung überall dort eingesetzt werden, wo nicht mit fertig behandelten Elementen gearbeitet werden kann. Bei Zusammenfügung einer Deckenverkleidung aus vrgefertigten Elementen würde man immer die Stossfugen sehen. Da bei der Einrichtung gemäss der Erfindung die Platte erst abschliessend behandelt wird, kann jede Grösse, ob 1 m² mit 50 Lichtpunkten oder 1600 m² mit 50000 Lichtpunkten, realisiert werden, ohne dass man störende Stossfugen sieht.

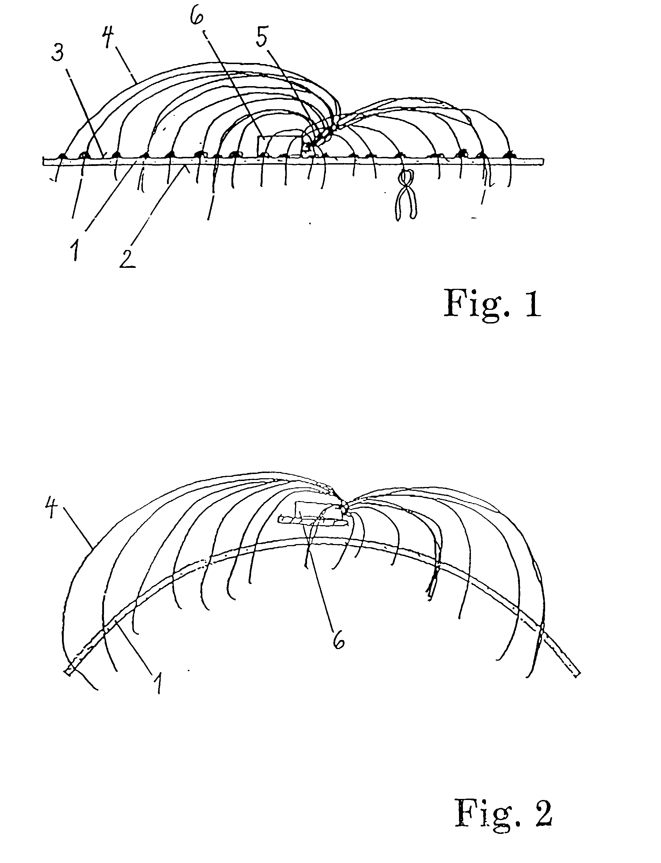

Bei der in Fig. 2 gezeigten Ausführungsform ist die Platte von unten gesehen konkav gewölbt. Bei dieser Form ergibt sich ein noch realistischerer Effekt.

## Patentansprüche

1. Einrichtung zur Erzeugung eines Lichteffekts mit einer Vielzahl von Lichtpunkten, beispielsweise zur Simulation eines Sternenhimmels, gekennzeichnet durch eine Trägerplatte (1) mit einer Sichtseite (2) und einer Rückseite (3), einen an der Rückseite angeordneten Projektor (6) und von der Sichtseite durch die Platte zur Rückseite führende und mit dem Projektor optisch gekoppelte, lichtleitende Fasern (4).

2. Lichteffekteinrichtung nach Anspruch 1, dadurch gekennzeichnet, dass die Platte (1) dreidimensional geformt, beispielsweise gewölbt ist.

3. Lichteffekteinrichtung nach einem der Ansprüche 1-2, dadurch gekennzeichnet, dass mehrere Projektoren an der Rückseite angeordnet sind.

4. Lichteffekteinrichtung nach einem der Ansprüche 1-3, dadurch gekennzeichnet, dass der bzw. die Projektoren mit einem Farbrad ausgerüstet sind.
